Europäisches Patentamt

**European Patent Office**

**Office européen des brevets**

(11) Veröffentlichungsnummer: **0 131 270**
**B1**

(12) **EUROPÄISCHE PATENTSCHRIFT**

(45) Veröffentlichungstag der Patentschrift:
**26.10.88**

(51) Int. Cl.⁴: **F 25 B 35/04**

(21) Anmeldenummer: **84107877.7**

(22) Anmeldetag: **05.07.84**

(54) **Feststoffabsorber für einen Absorptionskreisprozess.**

(30) Priorität: **08.07.83 DE 3324745**
**29.06.84 DE 3424116**

(73) Patentinhaber: **Schiedel GmbH & Co., Lerchenstrasse 9,**
**D-8000 München 50 (DE)**

(43) Veröffentlichungstag der Anmeldung:
**16.01.85 Patentblatt 85/3**

(72) Erfinder: **Januschkowetz, Gerhard, Dipl.-Phys.,**
**Amalienstrasse 77, D-8000 München 40 (DE)**

(45) Bekanntmachung des Hinweises auf die Patenterteilung:
**26.10.88 Patentblatt 88/43**

(74) Vertreter: **Dr. Elisabeth Jung Dr. Jürgen Schirdewahn**
**Dipl.-Ing. Claus Gernhardt, P.O.**
**Box 40 14 68 Clemensstrasse 30,**
**D-8000 München 40 (DE)**

(84) Benannte Vertragsstaaten:
**AT DE FR GB IT SE**

(56) Entgegenhaltungen:
**EP - A - 0 061 191**
**EP - A - 0 064 562**
**CH - A - 114 978**
**DE - C - 363 826**
**DE - C - 554 766**
**DE - C - 585 880**
**DE - C - 623 182**
**FR - A - 776 919**
**FR - A - 923 016**
**FR - A - 1 018 022**
**FR - A - 2 455 713**
**GB - A - 2 010 468**
**US - A - 2 253 907**
**US - A - 2 326 130**

## Beschreibung

Die Erfindung bezieht sich auf einen Feststoffabsorber in Plattenform für einen Absorptionskreisprozess gemäss dem Oberbegriff von Anspruch 1.

Bei einem Absorptionskreisprozess wird ein Kältemittel in Dampfform dem als Arbeitsmittel dienenden Absorberstoff eines Absorbers zugeführt und in diesem ab- oder adsorbiert. Dabei wird Ab- oder Adsorptionswärme frei. Diese Reaktionswärme wird über ein kühlendes Wärmetauschmedium abgeführt. Durch Wärmezuführung mittels eines heizenden Wärmetauschmediums kann der Absorberstoff regeneriert werden. Bei dem Regenerationsprozess wird das Kältemittel ausgetrieben, in einem nachgeschalteten Kondensator verflüssigt und unter Druckabsenkung einem Verdampfer zugeführt, von dem aus das Kältemittel nach Verdampfung dem regenerierten Absorber im Kreisprozess wieder zugeführt werden kann. Ein solcher Kreisprozess lässt sich in verschiedener Weise nutzen. Am bekanntesten ist die Benutzung als Absorptionswärmepumpe, als Absorptionskältemaschine oder als Wärmetransformator.

Ein solcher Absorptionskreisprozess kann kontinuierlich mit flüssigen Absorberstoffen oder diskontinuierlich, insbesondere periodisch, mit festen Absorberstoffen durchgeführt werden. Die Erfindung befasst sich mit der letztgenannten Möglichkeit. Moderne Paarungen von Absorberfeststoff und Kältemittel sind beispielsweise Zeolith und Wasser oder Ammoniak. Der erfindungsgemässe Feststoffabsorber ist insbesondere für die Verwendung mit derartigen Paarungen bestimmt. Zeolithe und vergleichbare Absorberfeststoffe zeichnen sich dadurch aus, dass sie während des Absorptionsvorganges (unter Absorption soll im folgenden Adsorption immer mit eingeschlossen sein) und des Desorptionsvorganges ihre geometrische Struktur, insbesondere eine Granulat- oder Würstchenform, beibehalten und auch während der Absorption von Kältemittel nicht quellen. Die Erfindung betrifft insbesondere auch Feststoffabsorber mit volumenkonstanten Absorberfeststoffen.

Es gibt grundsätzlich zwei Bautypen von Feststoffabsorbern. Bei dem ersten Bautyp wird das Kältemittel an einer Seite dem Absorberfeststoff zugeführt und an einer entgegengesetzten Seite aus dem Absorberfeststoff abgeführt. Für die Absorption und für die Desorption des Kältemittels sind dabei also zwei verschiedene Dampfräume vorgesehen. Die Erfindung befasst sich mit dem zweiten Bautyp, bei dem ein einziger Dampfraum abwechselnd als Absorberdampfraum und als Desorberdampfraum dient. Dieser zweite Bautyp bietet schon wegen der Einsparung eines zweiten Dampfraumes Vorteile.

Aus der Vielzahl des einschlägigen Stands der Technik sei für den ersten Bautyp als Beispiel nur der Feststoffabsorber gemäss US-A-4 034 569 genannt.

Bei Feststoffabsorbern sollten folgende unterschiedliche Anforderungen möglichst gleichzeitig optimal gelöst sein:

1. Der Stoffaustausch zwischen Kältemitteldampf und Feststoffabsorber sowohl beim Absorptionsprozess als auch beim Desorptionsprozess soll möglichst ungehindert und schnell stattfinden können und dabei die gesamte zur Verfügung stehende Masse des Absorberfeststoffes erfassen. Dies erfordert u.a. möglichst geringen Druckabfall längs des Dampfraumes wie auch geringe Druckdifferenzen zwischen der dem Dampfraum zugewandten Oberfläche des Feststoffabsorbers und weiter hinten liegenden Bereichen.

2. Sowohl der Wärmefluss bzw. Wärmestrom zum kühlenden Wärmetauschmedium während der Absorptionsphase als auch die Wärmeaufnahme vom heizenden Wärmetauschmedium in der Desorptionsphase sollen möglichst schnell und wirkungsvoll erfolgen, so dass insbesondere Wärmeverluste unerwünscht sind und grossflächige Wärmetauschflächen allen Bereichen des Absorberfeststoffes, der selbst im allgemeinen relativ schlecht wärmeleitend ist, möglichst nahe gelegen sein sollen.

3. Unbeschadet der Forderungen 1. und 2. soll der thermodynamische Wirkungsgrad des Feststoffabsorbers unter minimalem Aufwand an Wärmetauschermasse in bezug auf die vorgegebene Menge von Absorberfeststoff optimiert werden.

4. Die Bauart des Feststoffabsorbers soll es ermöglichen, die Anforderungen 1. bis 3. in gleich guter Weise unabhängig von der Dimensionierung des Feststoffabsorbers in bezug auf die Menge des Absorberfeststoffs ermöglichen zu können.

Die bekanntgewordenen Feststoffabsorber des nach der Erfindung betrachteten zweiten Bautyps tragen diesen verschiedenen Anforderungen nur unausgewogen Rechnung.

Die Erfindung geht gattungsgemäss aus von einem Kühlschrank der Homann-Werke, Wuppertal, gemäss Abb. 257 und 258 der Monographie R. Plank/Kuprianoff «Die Kleinkältemaschine», Springer Verlag Berlin, Göttingen, Heidelberg, 2. verbesserte Auflage, 1960, S. 351 bis 359, insbesondere ab S. 355 unter Zif. 3. Als Arbeitsmittel-Kältemittel-Paar wird das System Chlorcalcium-Ammoniak verwendet. Das Chlorcalcium wird in an ihrer oberen Stirnseite offene langgestreckte vertikale Kammern eingefüllt, die von geprägten und verschweissten Stahlblechen gebildet sind. Der Ammoniakdampf erfüllt einen Dampfraum, der sich aus frei bleibenden stirnseitigen Abschnitten der Kammern zusammensetzt. Die Oberfläche des Kammersystems ist durch angeschweisste Rippen stark vergrössert und wird abwechselnd durch Kühlluft und durch ein Brennersystem erhitzte Heizluft beaufschlagt. Chlorcalcium quillt während der Absorption von Ammoniak; deswegen können die Kammern immer nur teilweise aufgefüllt sein (vgl. DE-C-554 766, S. 2, Z. 62 bis 70). Der die Kammern bildende Wärmetauscher selbst hat das Format einer aufrecht stehenden Platte, deren vertikale grosse Dimension die Tiefe der Kammern und deren horizontale grosse Dimension die Folgerichtung der benachbarten Kammern beschreibt und deren zweite kleine horizontale Dimension die Länge zwischen den vom Wärmetauschmedium beaufschlagten Aussenflächen wiedergibt. Diese Länge kann nur klein sein, da sonst der Wärmefluss von den vom Wärmetauschmedium beaufschlagten Aussenflächen durch die Kammeraussenwände in den Absorberfeststoff nicht mehr ausreicht. Dadurch ist die oben genannte Forderung 4. nicht mehr verwirklichbar, nämlich die Möglichkeit, das System unbeschränkt in Richtung der genannten (kurzen) Länge auszudehnen. Eine Systemerweiterung ist nur in Breitenrichtung möglich, da auch eine Ausdehnung in Tiefenrichtung der obigen Forderung 1. entgegenstehen würde. Auch der in dieser Forderung erwähnte Gesichtspunkt, es über den Dampfraum nicht zu Druckabfällen kommen zu lassen, ist bei dieser vorbekannten Anordnung nicht befriedigend gelöst, da die ganzen vereinzelten Dampfräume über den einzelnen Kammern durch ein Leitungssystem gespeist werden müssen, was Druckabfälle längs des Dampfraumes nur schwer vermeiden lässt. Bei übermässiger Tiefe der Kammern würden übrigens zusätzlich zum unzureichenden Stoffaustausch auch noch unerwünschte zusätzliche Druckabfälle eintreten.

Um kompaktere Baueinheiten zu erhalten, hat man nun in verschiedenen Bauformen versucht, den Wärmetauscher zylindrisch aufzubauen. Bei gattungsfernen Feststoffabsorbern gemäss der DE-C-612 169 und der ebenfalls auf die Homann-Werke zurückgehenden DE-C-814 158 hat man hierzu kreisscheibenförmige oder ringscheibenförmige Tragbleche vertikal übereinander angeordnet. Bei dieser nicht gattungsgemässen Anordnung, bei der keine einzelnen Kammern nebeneinander vorgesehen sind, werden die Aussenflächen des Zylinders und gegebenenfalls eine zylindrische Kernaussparung mit dem Wärmetauschmedium beaufschlagt. Aus demselben Grund wie bei dem gattungsgemässen Feststoffabsorber ist hier die der Länge des gattungsgemässen Absorbers entsprechende radiale Ausdehnung des Wärmetauschers begrenzt. Auch die Forderung 4. ist unerfüllbar, da bei Vergrösserung des Feststoffvolumens völlig neue Wärmetauscher mit unterschiedlichen Radien gebaut werden müssen. Ausserdem bestehen weiterhin Bedenken hinsichtlich der anderen erwähnten Kriterien, insbesondere des Druckverlaufs.

Bei einer weiteren bekannten zylindrischen Konfiguration gemäss der bereits zum Stoffsystem Chlorcalcium-Ammoniak genannten DE-C-554 766, bei der die Zylinderachse horizontal angeordnet ist, wird quellender Absorberfeststoff zwischen einer Folge von ringförmigen Metallblechen zusammengespannt. Dieses zusammengespannte Aggregat wird mit Quellvolumen aufnehmendem Spiel in einem aussen lamellenverrippten Wärmetauschkörper eingesetzt. Das Spielvolumen bildet gleichzeitig den Dampfraum. Als heizendes Wärmetauschmedium dient ein zentral eingesetzter Widerstandsheizstab, als kühlendes Wärmetauschmedium ein die Verrippung des zylindrischen Wärmetauschkörpers beaufschlagender Luftstrom. Die überwiegende Wärmezu- und Wärmeabfuhr erfolgt hier jeweils von den Stirnseiten der zwischen den ringförmigen Metallblechen gebildeten Kammern. Der Wärmeübergang von der radial innen liegenden Stirnseite ist dabei dadurch gehemmt, dass diese Stirnseite im Verhältnis zur übrigen Kammeraussenfläche die kleinste Fläche ist. Die Abkühlung von aussen her ist dadurch gehemmt, dass ein wärmeleitender Kontakt über die ganze Umfangsfläche der Kammern mit dem äusseren verrippten Wärmetauschkörper erst bei vollständiger Aufquellung des Absorberfeststoffes zustande kommt und dann die Wärmeleitung zwischen dem äusseren Wärmetauscher und den inneren Teilblechen noch durch mindestens über einen grossen Umfangsbereich dazwischen liegende Absorberfeststoffmassen geringer Leitfähigkeit gestört ist. Nach dem Aufquellen des Absorberfeststoffes wird dabei auch der Dampfraum weitgehend durch eine poröse Masse erfüllt, die zwischen die Metallbleche nicht wieder zurückgeführt wird und dabei zu erheblichen Druckabfällen im Dampfraum führt.

Bei einem Feststoffabsorber nach der FR-A-923 016 ist der zylindrische Aufnahmeraum durch radial verlaufende Zwischenwände in einzelne, sich nach aussen segmentförmig erweiternde Kammern unterteilt. Diesen Kammern ist ein gemeinsamer, von Kältemitteldampf beaufschlagbarer Dampfraum zugeordnet, der an der einen Stirnseite des zylindrischen Aufnahmeraumes angeordnet ist. An der anderen Stirnseite kann eine Wärmequelle in Gestalt eines Brenners zum Austreiben des Kältemitteldampfes aus dem Absorberfeststoff angelegt werden. Die Diffusionsrichtung des Kältemitteldampfes in den Absorberfeststoff hinein und die Austreibrichtung wieder aus diesem heraus verlaufen dabei jeweils in Achsrichtung des zylindrischen Aufnahmeraumes. Da die axiale Dimension wesentlich länger als die radiale Dimension ist, ist schon die Anforderung 1 nicht erfüllt. Auch die Anforderungen 3 und 4 sind ersichtlich nicht erfüllt.

Bei dem Feststoffabsorber nach der CH-A-114 978 ist zwar schon ein Feststoffabsorber mit zylindrischem Aufnahmeraum bekannt, in welchem zylinderscheibenförmige Kammern durch axial aufeinanderfolgende die Zwischenwände zwischen den Kammern bildende Trennscheiben voneinander abgeteilt sind. Dabei werden die einzelnen Kammern umfangsseitig vom Kältemitteldampf eines gemeinsamen Dampfraumes beaufschlagt. Die Anforderung 2 ist jedoch nicht optimal erfüllt, da sich die einzelnen Kammern von radial aussen nach radial innen hin verjüngen. Wie bei allen zylindrischen Konfigurationen ist auch die Anforderung 4 nicht erfüllt.

Alle die betrachteten bekannten Feststoffabsorber sind relativ alt. Aber noch in jüngster Zeit wurde ein Feststoffabsorber mit zylindrischem Aufnahmeraum bekannt (EP-A-0 061 191), der sich von dem der vorher besprochenen CH-A-114 978 im wesentlichen nur dadurch unterscheidet, dass der von dem Kältemitteldampf beaufschlagte gemeinsame Dampfraum nunmehr nicht mehr umfangsseitig, sondern als zylindrische Kammer radial innen ausgebildet ist. Diese Anordnung ist sogar noch nachteiliger als die der CH-A-114 978, weil der Kältemitteldampf nur eine relativ kleine Oberfläche des Feststoffabsorbers beaufschlagt und zudem noch durch eine poröse Zwischenwand hindurchtritt, welche den Diffusionsaustausch mit dem Feststoffabsorber weiter behindert.

Die genannten Nachteile haben in der Zwischenzeit zu einer Stagnation der einschlägigen Technik geführt. In neuerer Zeit hat man nun versucht, diesen Schwierigkeiten erneut Herr zu werden, ohne aber bisher zu einer überzeugenden Lösung zu kommen. Der neueste Stand wird durch die DE-A-3 016 290 veranschaulicht. Hierbei werden plattenförmige Baueinheiten, die beliebig parallelschaltbar sind, dadurch gewonnen, dass granulatförmiger Absorberfeststoff, auch Zeolith, von einer flexiblen Hülle aus Metall oder Kunststoff eng zu einer im wesentlichen starren Platteneinheit umgeben wird. Diese nimmt jeweils einen eigenen Dampfraum in sich auf. Bevorzugt ist dabei eine Anordnung, bei der dieser Dampfraum sich in einer Zentralebene der Platteneinheit erstreckt, zu deren beiden Seiten zwei Flachkammern abgeteilt sind, die an den Aussenflächen der Platteneinheit von dem wärmenden oder kühlenden Wärmetauschmedium beaufschlagt sind. Aus Gründen optimalen Wärmekontaktes mit dem die Platten aussen beaufschlagenden Wärmetauschmedium kann dabei die jeweilige Kammertiefe nur sehr gering sein, da sich ja an den beiden Flachseiten der Kammern Dampfräume und Beaufschlagungsräume mit dem Wärmetauschmedium abwechseln und daher der Wärmefluss nur von einer Flachseite in die Kammer eintritt bzw. aus dieser austritt. Die Schmalseiten der Kammern kann man dabei vernachlässigen. Dies erfordert trotz der Zerlegung in einzelne Baueinheiten pro Baueinheit einen relativ hohen Bauaufwand.

Der Erfindung liegt die Aufgabe zugrunde, einen neuen Weg zur möglichst optimalen Erfüllung der genannten vier Anforderungen zu finden.

Diese Aufgabe wird bei einem gattungsgemässen Feststoffabsorber durch die kennzeichnenden Merkmale von Anspruch 1 gelöst.

Bei dem Feststoffabsorber gemäss der Erfindung wird zunächst von einer Vielzahl nebeneinander liegender Kammern ausgegangen, die durch wärmeübertragende Zwischenwände voneinander abgeteilt sind. Da der Feststoffabsorber in Plattenform vorgegeben ist, kann man dabei gedanklich innen liegende Kammern, die an beiden Seiten von einer Zwischenwand begrenzt sind, von aussen liegenden oder End-Kammern unterscheiden, die nur an einer Seite von einer Zwischenwand oder nebeneinander liegenden Kammern begrenzt sind. Wenn man Wert darauf legt, kann man die aussen liegenden Kammern mit den gleichen Charakteristika wie die innen liegenden Kammern versehen, ohne dass dies zwingend erforderlich ist. Charakteristisch für die Erfindung sind die innen liegenden Kammern, die in beliebiger Anzahl vorliegen können, so dass im Rahmen der Erfindung mindestens drei nebeneinander liegende Kammern vorausgesetzt sind.

Bei Vervielfältigung der Zahl der innen liegenden Kammern kann man die Gestaltung des gemeinsamen Dampfraumes als vorzugsweise zusammenhängenden Dampfraum ebenso wie die Verschaltung des Feststoffabsorbers beibehalten.

Bei jeder einzelnen innen liegenden Kammer lässt sich die Kammertiefe optimal auf die gewünschte Periode des Stoffaustausches einstellen. Der Wärmezu- und Wärmeabfluss erfolgt von beiden Seiten der Kammer her, so dass ohne Verlust an Wärmezu- bzw. Wärmeabfuhr die Kammerbreite doppelt so gross wie die Plattenstärke der DE-A-3 016 290 gewählt werden kann. Dabei bleibt ohne Beeinträchtigung der Eigenschaften die Längendimension frei wählbar und kann so an die gewünschte Menge von Feststoffabsorber angepasst werden, ohne die Zahl der Kammern für diesen Zweck steigern zu müssen. Es ist daher noch nicht einmal erforderlich, die Kammertiefe vom Gesichtspunkt des Stoffaustausches her voll ausnutzen zu müssen, da in anderer Richtung Erweiterungsmöglichkeiten bestehen; man kann daher insbesondere die Kammertiefe sehr klein halten, um in Richtung der Kammertiefe einen nur kleinen Druckabfall zu erhalten.

Die beiden alternativen Lösungen der Erfindung – die auch miteinander gekoppelt sein können, wie an einem bevorzugten Ausführungsbeispiel später noch erläutert wird – sehen dabei entweder eine indirekte oder eine direkte Kühlung oder Aufheizung der Seitenwände der innen liegenden Kammern, also der Zwischenwände der nebeneinander liegenden Kammern, vor. Die direkte Kühlung ist intensiver als die indirekte Kühlung, der grössere Bauaufwand bei direkter Kühlung kann jedoch mindestens teilweise dadurch kompensiert werden, dass man mit grösseren Kammerbreiten arbeiten kann. Bei beiden alternativen Lösungen ist dabei das Verhältnis Feststoffabsorbermasse zu Masse des Wärmetauschers im Sinne der Forderung 3. günstig. Die Forderungen 1. und 2. lassen sich optimal erfüllen. Die Forderung 4. ist mindestens prinzipiell durch freie Verfügbarkeit einerseits der Breitendimension (Anzahl der Kammern) als auch der Längendimension andererseits erfüllt. Es ist ohne weiteres möglich, falls erwünscht, auch erfindungsgemässe Feststoffabsorber in Baueinheiten zusammenzufassen und parallel oder auch in Reihe zu schalten. Es empfiehlt sich dabei jedoch, eine grosse Vielzahl innen liegender Kammern vorzusehen, um den Aufwand von Modifikationen an aussen liegenden Kammern gering zu halten. Bei gleichen wirkungsmässigen Eigenschaften kann man entweder die Breite einer aussen liegenden Kammer halb so gross wählen wie die Breite innen liegender Kammern oder auch die freien Seitenwände der aussen liegenden Kammern als Wärmetauschflächen mit direkter oder indirekter Kühlung bzw. Aufheizung gestalten oder aber in beide Richtungen zielende Massnahmen miteinander kombinieren.

Anspruch 2 beschreibt eine konstruktiv besonders einfache Ausführungsform eines Feststoffabsorbers mit indirekter Kühlung, d.h. mittels Kühlung über eine nennenswerte wärmeleitende Zwischenstrecke.

Die erste Alternative von Anspruch 3 greift dabei die zweite Alternative von Anspruch 2 auf, nämlich den Fall einer beidseitig berippten Platte, im Normalfall wird dabei die den Kammern abgewandte Verrippung von einem insbesondere gasförmigen Wärmetauschmedium frei beaufschlagt sein. Die zweite und dritte Alternative von Anspruch 3 gibt demgegenüber Möglichkeiten an, bei beiden Alternativen von Anspruch 2 das Wärmetauschmedium auch oder allein in mindestens einem Kanal zu führen. Dieser Kanal kann in einfachster Ausführungsform ein Strömungskanal oder sonstiger Gaskanal (vgl. Anspruch 7) für ein gasförmiges Wärmetauschmedium sein. Insbesondere kommt die Kanalausbildung in Frage für flüssige Wärmetauschmedien oder gar für die Aufnahme einer Widerstandsheizung (Anspruch 5), sogar eines als Widerstandsheizung ausgebildeten Wärmetauschmediums. Es zeigt sich, dass man dabei die Konstruktion eines Rippenwärmetauschers mit der eines einen Kanal bildenden Wärmetauschers vereinigen kann.

Gemäss Anspruch 4 ist es nicht erforderlich – aber natürlich möglich –, dass jeder Kammer ein eigener Kanal zugeordnet ist.

Wie bereits erwähnt, können die Kanäle zur Aufnahme verschiedener Arten von Wärmetauschmedien dienen. Anspruch 6 gibt dabei eine Besonderheit an, wonach auch eine alternierende Funktion von aufeinanderfolgenden Kanälen vorgesehen sein kann, insbesondere, um über die aufeinanderfolgenden Kanäle abwechselnd aufheizen und abkühlen zu können.

Als aufheizendes Wärmetauschmedium kann auch Solarenergie dienen, wobei dann die wärmeaufnehmende Fläche nach Art von Solarkollektoren auszubilden ist.

Bei Ausbildung des erfindungsgemässen Feststoffabsorbers als Rippenwärmetauscher bildet dieser vorzugsweise ein Strangpressprofil (Anspruch 8). Dies bedeutet eine besonders einfache Herstellungsweise.

Allgemein sind vorzugsweise gemäss Anspruch 9 die dem Dampfraum zugewandten Kanten der Zwischenwände von einer dünnen Schicht des Absorberfeststoffes überdeckt. Dies ermöglicht es, ohne Funktionseinbusse die Bauhöhe der Zwischenwände kleiner als die Tiefe der Absorberfeststoffmasse zu halten. Einerseits kann in dieser dünnen Schicht angeordnete Absorberfeststoffmasse hinreichend von der Stirnseite der Zwischenwand aus gekühlt bzw. erhitzt werden. Wenn eine solche dünne Schicht auf der dem Dampfraum abgewandten Seite angeordnet ist und dort nicht in Tandemanordnung ein weiterer Dampfraum vorgesehen ist, kann dort der Absorberfeststoff zugleich als Wärmeisolationsmittel zum anschliessenden mechanischen Aufbau des Feststoffabsorbers dienen. Eine optimale Erfüllung dieser Bedingungen ergibt Anspruch 10.

Auch die Zwischenwände selbst brauchen die von ihnen gebildeten Kammern nur teilweise voneinander abzuteilen (Anspruch 11). Die Lücken der Zwischenräume können dann auch von Absorberfeststoff erfüllt sein.

Im Falle direkter Kühlung sind nach einer ersten bevorzugten Alternative die als Hohlleitungen ausgebildeten Zwischenwände von längs der jeweiligen Zwischenwand verteilten Rohren gebildet (Anspruch 12). Dies lässt sich besonders einfach konstruktiv realisieren. Die konstruktiv einfachste Realisierung erhält man dabei unter Verwendung von Rundrohren (Anspruch 13). Man kann aber auch Flachrohre (Anspruch 14) verwenden, wobei sich die Flachseite zweckmässig in Richtung der Kammertiefe erstreckt. Zum Beispiel kommen Ovalrohre hierbei in Frage. Die Rohre können sich dabei zum Aufbau der Zwischenwand jeweils berühren; bevorzugt ist jedoch ein gegenseitiger Abstand, so dass die Zwischenwände im schon erwähnten Sinne von Anspruch 14 die zwischen ihnen liegenden Kammern nur teilweise voneinander abteilen und gegebenenfalls die Lücken zwischen den Rohren von einer entsprechend dünnen Schicht Absorberfeststoff erfüllt sind.

Im Falle direkter Kühlung sind nach einer zweiten bevorzugten Alternative die als Hohlleitungen ausgebildeten Zwischenwände jeweils einzelne Flachrohre (Anspruch 15), die einen etwas abgerundeten rechteckigen Querschnitt haben können (Anspruch 16).

Die Rohre können gemäss Anspruch 17 durch Rohrböden zu einem Rohrbündelwärmetauscher zusammengefasst sein. Im Falle einzelner Flachrohre nach Anspruch 14 oder 16 wird dabei ein einem Rippenwärmetauscher ähnlicher Aufbau erreicht, so dass die nach der Erfindung allgemein erwünschten quaderförmigen Kammern gebildet werden können.

Alternativ können im Rahmen der Erfindung nach Anspruch 1 auch die Hohlleitungen von dem einen Kanalsystem eines Kreuzstrom-Plattenwärmetauschers gebildet sein, dessen zweites Kanalsystem die Kammern bildet (Anspruch 18).

Auch der nach der Erfindung weitergebildete zweite Bautyp ermöglicht es, gemäss Anspruch 19 beide Stirnseiten der Kammern mit je einem Dampfraum kommunizieren zu lassen, die miteinander verbunden sind. Der Unterschied zum ersten Bautyp besteht dabei also darin, dass beide Dampfräume miteinander kommunizieren, so dass praktisch die mit ihren beiden Stirnseiten an je einen Dampfraum angeschlossene jeweilige Kammer eine Tandemanordnung von zwei Kammervolumina darstellt, die jeweils nur an einen einzigen zugeordneten Dampfraum angeschlossen sind, dabei aber hintereinander angeordnet sind. Typisch ist hierbei, dass die Stoffaustauschgrenze jeweils von einem Dampfraum bis zur mittleren Tiefe der Kammer wandert und dann wieder zurückwandert, während sie bei Feststoffabsorbern des ersten Bautyps durch die ganze Kammer von einem Dampfraum zum anderen hindurchwandert. Bei dieser Tandemanordnung ist also die durch die Wanderung der Stoffaustauschgrenze bestimmte Geräteperiode nur auf die halbe Tiefe der Kammer bezogen, beim ersten Bautyp auf die ganze Tiefe.

Auch der erfindungsgemässe Feststoffabsorber ermöglicht es, den Absorberfeststoff lose in oben offene Kammern einzufüllen. Dann ist man allerdings bezüglich der räumlichen Ausrichtung im praktischen Absorptionskreisprozess ebenso wie bei Transport eingeschränkt. Eine völlig invariante Raumanordnung ermöglicht ein Abschluss des Absorberfeststoffs zum Dampfraum mittels eines Gitterwerks nach Anspruch 20 mit der vorteilhaften Weiterbildung nach Anspruch 21; hiernach wird die das intakte Granulat niederhaltende Funktion durch ein grobes Stützgitter und die Sperrfunktion gegen ein Einwandern von staubförmig gewordenem Absorberfeststoff in den Dampfraum und anschliessende Leitungen durch ein für den Kühlmitteldampf noch durchlässiges Staubsieb erfüllt, wobei das im allgemeinen mechanisch sehr wenig widerstandsfähige Staubsieb seinerseits von dem Stützgitter niedergehalten sein kann.

Zur Einhaltung möglichst identischer Druckverhältnisse in allen Kammern ist gemäss Anspruch 22 der Dampfraum vorzugsweise derart drosselungsarm zusammenhängend ausgebildet, dass an allen Kammern im wesentlichen derselbe Dampfdruck des Kältemittels herrscht. Dies lässt sich insbesondere mittels eines verhältnismässig grossvolumigen zusammenhängenden Dampfraumes erreichen, der allen Kammern gegenüberliegt.

Die Ansprüche 20, 21 sowie 23 bis 27 betreffen einige bevorzugte bauliche Gestaltungen. Anspruch 28 hebt noch einmal die nach der Erfindung insbesondere angestrebte Quaderform der Kammern hervor, die jedoch in gewissem Masse Modifikationen zugänglich ist, ohne das Wirkungsprinzip der Erfindung wesentlich abzuschwächen. So kann man z. B. vorsehen, dass die jeweilige Achse mindestens der innen liegenden Kammern in deren Tiefenrichtung gekrümmt verläuft (Anspruch 29). Dies kann man besonders einfach realisieren, wenn als Hohlwände ausgebildete Zwischenwände aus mehreren Rohren aufgebaut sind, wie dies die Ansprüche 12 bis 14 vorsehen. Dann können diese eine gemeinsame Zwischenwand bildenden Rohre gegeneinander versetzt angeordnet werden (Anspruch 30). Dies kann z.B. so erfolgen, dass die Rohre auf Lücke versetzt angeordnet werden (Anspruch 31). Unter «Versetzung auf Lücke» soll dabei sowohl eine Anordnung gegenüber dem Mittelpunkt der Lücke als auch eine demgegenüber nur unvollständige seitliche Verschiebung in Richtung auf die Lücke verstanden werden.

Die Ansprüche 32 bis 34 betreffen bevorzugte Bemessungen einer quaderförmigen Kammer und der Anspruch 35 betrifft eine vorteilhafte Wahl des Absorberfeststoffs für den erfindungsgemässen Feststoffabsorber.

Die Erfindung wird im folgenden anhand schematischer Zeichnungen an mehreren Ausführungsbeispielen noch näher erläutert. Es zeigen:

Fig. 1 eine erste Ausführungsform eines Feststoffabsorbers als Rippenwärmetauscher im Querschnitt durch eine durch Tiefe und Breite der Kammern bestimmte Ebene unter gleichzeitiger Darstellung des den Wärmetauscher umgebenden Gehäuses des Feststoffabsorbers;

Fig. 2 bis Fig. 7 alternative Ausführungen des Feststoffabsorbers unter nur schematischer Andeutung des Gehäuses wobei,

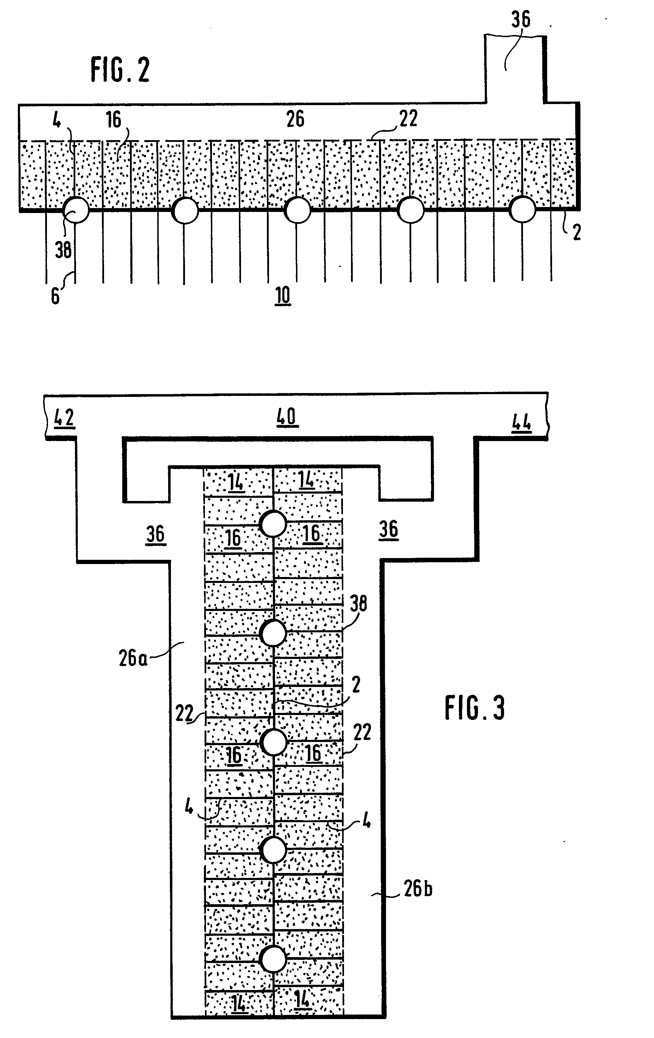

Fig. 2 einen Feststoffabsorber mit durch zusätzliche Anordnung von Kanälen modifiziertem Rippenwärmetauscher,

Fig. 3 einen Feststoffabsorber in einem Gehäuse mit zusammengefasster doppelter Kammerreihe und Führung des Wärmetauschmediums nur durch Kanäle,

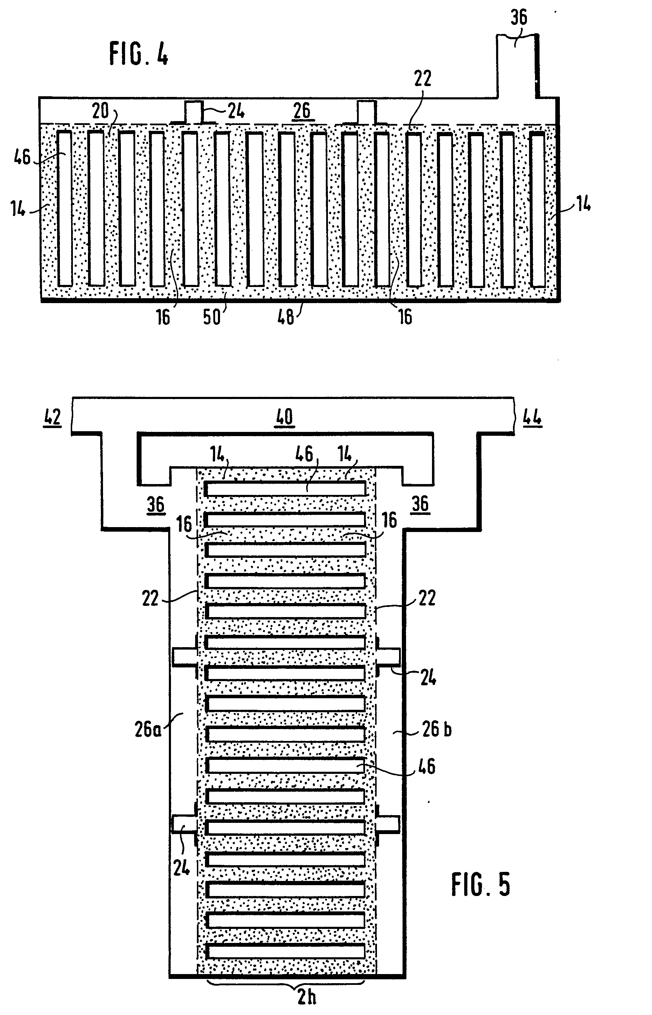

Fig. 4 einen Feststoffabsorber mit Flachrohr-Bündelwärmetauscher,

Fig. 5 einen Feststoffabsorber mit Abwandlung des Wärmetauschers gemäss Fig. 4 unter Anschluss beider Stirnseiten an je einen Dampfraum,

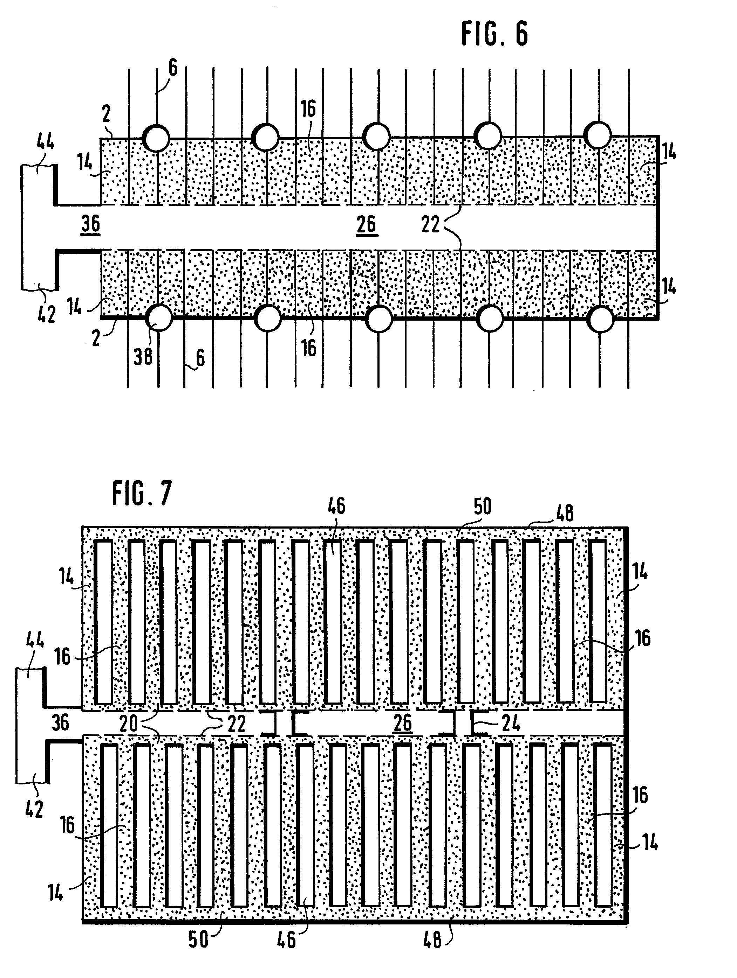

Fig. 6 einen Feststoffabsorber mit Verdopplung des Wärmetauschers gemäss Fig. 2 und gemeinsamem Dampfraum und

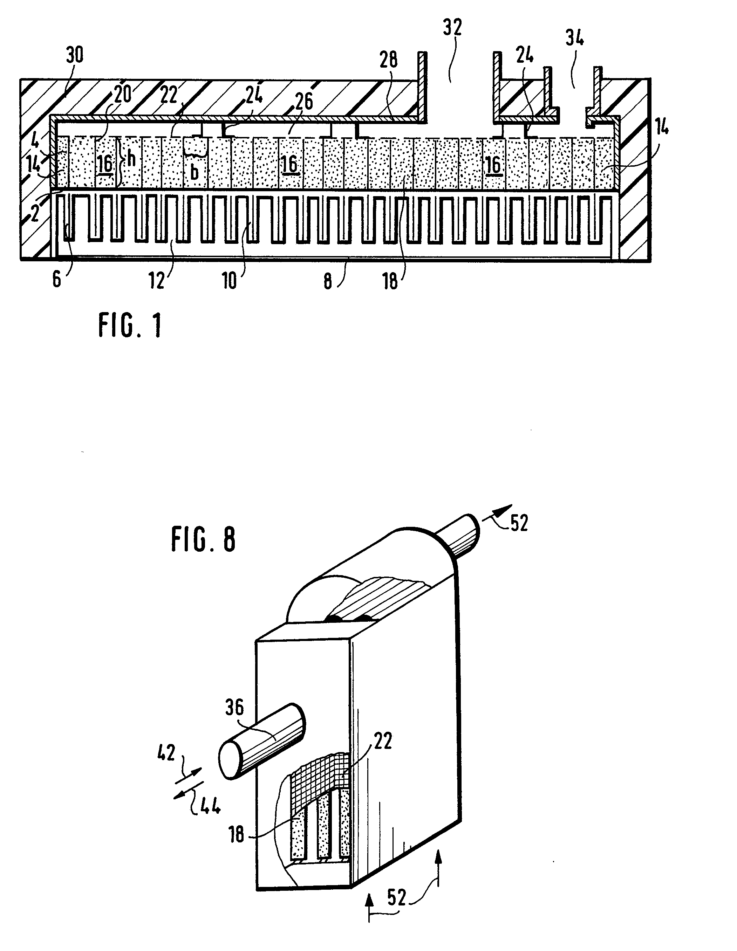

Fig. 7 einen Feststoffabsorber mit Verdopplung des Wärmetauschers gemäss Fig. 4 und gemeinsamem Dampfraum zeigen, und wobei die Schnittführung in den Fig. 2 bis 7 der Schnittführung in Fig. 1 entspricht;

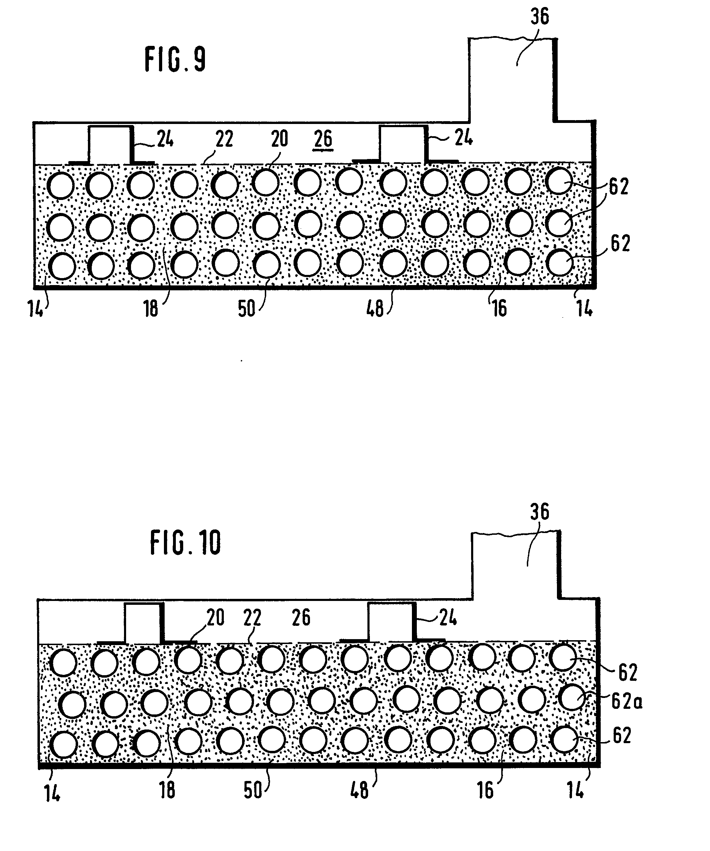

Fig. 8 eine teilweise geschnittene perspektivische Ansicht eines Feststoffabsorbers mit Ausbildung des Wärmetauschers als Kreuzstrom-Plattenwärmetauscher; und

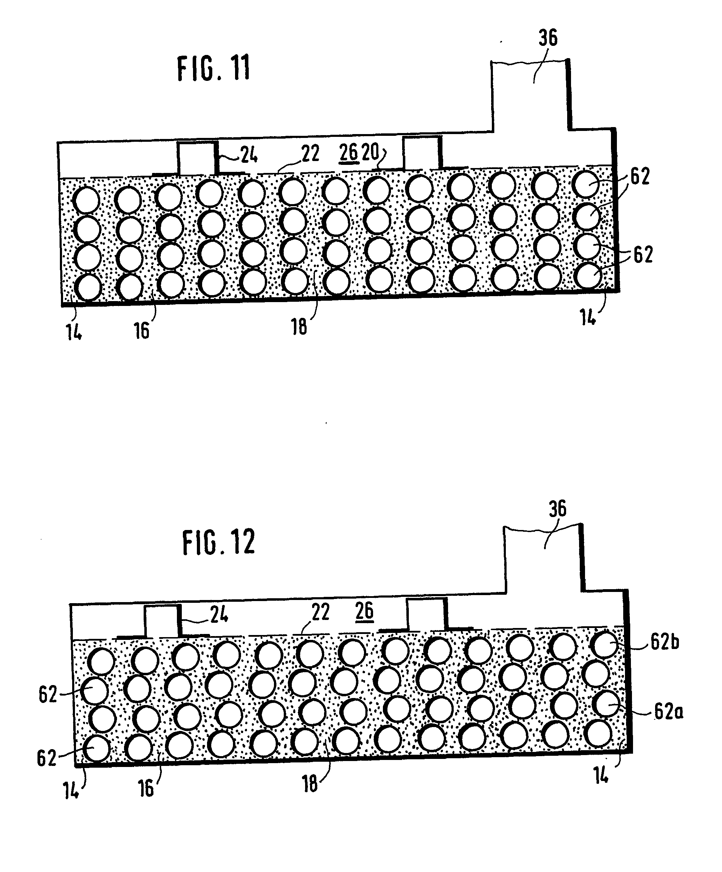

Fig. 9 bis 12 vier Modifikationen von Fig. 4, bei denen jeweils das eine Zwischenwand zwischen benachbarten Kammern bildende Flachrohr durch mehrere Rohre ersetzt ist, die sich längs der Zwischenwand erstrecken, und zwar gemäss Fig. 9 und 11 geradlinig und gemäss Fig. 10 und 12 unter teilweiser Versetzung der Rohre auf Lücke krummlinig, wobei jede Zwischenwand gemäss den Fig. 9 und 10 von drei und gemäss den Fig. 11 und 12 von vier Rohren gebildet ist.

Der Feststoffabsorber gemäss Fig. 1 weist als Wärmetauscher einen Rippenwärmetauscher auf, der von einem Strangpressprofil gebildet ist. Dieses besitzt eine zentrale Platte 2, an deren beiden Seiten lamellenförmige Rippen 4 bzw. 6 ausgebildet sind. Die Rippen 4 und die Rippen 6 sind jeweils äquidistant. Aus Herstellungsgründen ist es auch von Vorteil, wenn die Rippen 4 und 6 einander gegenüberliegen; dies ist jedoch funktionell nicht zwingend erforderlich.

Die Platte 2 bildet zusammen mit einem auf ihr aufsitzenden U-Profil 8 einen rechteckigen Schacht, in den die über ihn verteilten Rippen 6 hineinragen und der senkrecht zur Zeichenebene als Gaskanal oder Gaskamin 10 dient. Durch diesen kann abwechselnd kühlendes und heizendes gasförmiges Wärmetauschmedium geleitet werden, beispielsweise abwechselnd von einem Ventilator bewegte Kühlluft und Verbrennungsgase. Zur Erhöhung des Wärmeübergangs vom Wärmetauschmedium auf die Rippen 6 sind über den Gaskanal 10 parallel zur Zeichnungsebene einige kammartige Turbulenzbleche 12 verteilt, die an dem langgestreckt flach ausgebildeten U-Profil 8 befestigt sind und unter Belassung eines Abstandes gegenüber den Rippen 6 und der Platte 2 mit den Rippen 6 kämmend angeordnet sind.

Die Rippen 4 teilen zwischen sich quaderförmige Kammern jeweils gleicher Dimensionierung ab. Dabei entstehen zwei Seitenkammern 14 und jeweils untereinander gleich dimensionierte Kammern 16, die jeweils zu beiden Seiten je eine Nachbarkammer 14 oder 16 besitzen. Die Kammern haben eine Tiefe (oder Höhe) h, eine Breite b sowie senkrecht zur Zeichnungsebene eine Länge l, die unbestimmt und insbesondere sehr lang gewählt sein kann. Die Breite der beiden Seitenkammern 14 beträgt etwa b/2. Die Kammern 14 und 16 sind mit bei Absorption eines Kältemittels nicht quellendem, überhaupt formstabilem, granulat- oder würstchenförmigem Absorberfeststoff 18, insbesondere Zeolith, angefüllt. Der Absorberfeststoff 18 bildet ausserdem noch eine dünne Schicht 20, welche die freien Ränder der Rippen 4 überdeckt und eine Stärke von höchstens b/2, hier eine deutlich geringere Stärke, hat. Der Absorberfeststoff wird in Richtung zu den Kammern 14 und 16 dabei von einem Gitterwerk 22 niedergehalten, welches lediglich schematisch durch eine gestrichelte Linie angedeutet ist. Dieses Gitterwerk 22 besteht aus einem den Kammern zugewandten feinen Staubsieb, vorzugsweise aus Metall, welches für Staub von Absorberfeststoff undurchlässig, für Kältemitteldampf jedoch durchlässig ist und flexibel sein kann. Der Absorberfeststoff 18 und das Staubsieb werden von einem groben Stützgitter niedergehalten. Das Stützgitter ist seinerseits von mehreren über die Plattenlänge verteilten lokalen Abstandhaltern 24 abgestützt. Diese können beispielsweise knopfförmig, säulenförmig oder als, wie dargestellt, kurze U-Profile mit äusseren Abkantungen ausgebildet sein. Es ist dabei wesentlich, dass sich die Abstandhalter 24 nicht über die ganze Länge der Kammern erstrecken, sondern an der der Platte 2 abgewandten Kammerseite einen zusammenhängenden Dampfraum 26 belassen. Die Abstandhalter 24 stützen sich ihrerseits an einem als flacher rechteckiger Topf ausgebildeten Deckel 28 ab, der gegenüber vom U-Profil 8 lösbar an die Platte 2 ansetzbar ist. Anstatt gesonderte Abstandhalter 24 vorzusehen, kann man sie auch intetral mit dem Deckel 28 ausbilden, beispielsweise als tiefgezogene Abschnitte.

Es ist nicht zwingend erforderlich, dass der Deckel 28 nach seiner Befestigung an der Platte 2 wieder lösbar ist, wenn dies auch zum Einfüllen des Absorberfeststoffes und zur Vornahme von etwaigen Reparaturarbeiten Vorteile haben kann. Da an sich der gefüllte Feststoffabsorber sehr dauerstandfest ist, kann man den Deckel auch dauerhaft befestigen, beispielsweise mit dem Rippenwärmetauscher verschweissen.

Mindestens über den vom Dampfraum 26 und den Kammern 14 und 16 eingenommenen Bereich erstreckt sich ferner eine wärmedämmende Schale 30, die sich hier auch noch bis über die Randzonen des Gaskanals 10 bis in die Ebene im Bereich des Rückens des U-Profils erstreckt.

Der Dampfraum 26 weist zwei Rohranschlüsse 32 und 34 auf. Der Rohranschluss 32, der etwas grösseren lichten Querschnitt als der Rohranschluss 34 hat, ist mit einem nicht dargestellten Verdampfer und der Rohranschluss 34 mit einem nicht dargestellten Kondensator eines periodisch arbeitenden Absorptionskreisprozesses verbindbar. Dabei werden Kondensator und Verdampfer abwechselnd an den Dampfraum 26 angeschlossen, während der jeweils andere Anschluss in dieser Zeit gesperrt ist. Die hierzu vorgesehenen Ventile sind zu den Anschlüssen 32 und 34 ergänzend zu denken.

Die Befüllung der Kammern 14 bzw. 16 wird zweckmässig nicht von seiten des späteren Dampfraums, sondern in Richtung der Breite der Kammern mit anschliessender Verteilung in Richtung der Länge der Kammern vorgenommen. Hierzu kann man in dieser Richtung die einzelnen als Zwischenwände der Kammern dienenden Rippen 4 etwas zurückschneiden und so einen gemeinsamen Füllraum gewinnen, der durch einen verschliessbaren äusseren Einfüllstutzen gespeist werden kann. Dies ermöglicht es, die ganze Anordnung einschliesslich des Gitterwerkes vorzufertigen und danach erst die Füllung mit dem Absorberfeststoff vorzunehmen.

Anstelle gesonderter Anschlüsse 32 und 34 kann man auch einen gemeinsamen Leitungsanschluss 36 vorsehen, wie dies ohne Beschränkung der Allgemeinheit am Ausführungsbeispiel gemäss Fig. 2 veranschaulicht ist. In diesem Falle wird man dem Rohrleitungsanschluss 36 eine Zweiwegeventilanordnung in Richtung zum Verdampfer und zum Kondensator nachordnen, die im Gegentakt betrieben wird.

Der Grundaufbau des Feststoffabsorbers gemäss Fig. 2 ist sonst gleich dem gemäss Fig. 1. Die Besonderheit besteht lediglich darin, dass in der Platte 2 in deren Kreuzungspunkt mit Rippen 4 und 6 jeweils zylindrische Kanäle 38 ausgebildet sind, die jeweils im Abstand mehrerer Kammern 16 aufeinanderfolgen. Bei dem gezeigten Ausführungsbeispiel ist jeweils ein Kanal 38 vier Kammern 16 bzw. 14 zugeordnet.

Derartige Kanäle 38 lassen sich unterschiedlich nutzen. Zum einen können sie den einen Typ des Wärmetauschmediums aufnehmen, beispielsweise das heizende Wärmetauschmedium, während die Rippen 6 wie bisher von einem kühlenden Luftstrom beaufschlagt werden. Man kann jedoch auch die Rippen 6 von einem Heizstrom beaufschlagen und in den Kanälen 38 ein kühlendes Wärmetauschmedium führen. Schliesslich kann man die Kanäle 38 zur Verstärkung der Wirkung eines die Rippen 6 beaufschlagenden Wärmetauschmediums verwenden, beispielsweise die Rippen 6 mit einem heizenden Luftstrom beaufschlagen und zusätzlich in den Kanälen 38 Wärmeenergie durch ein flüssiges Wärmetauschmedium oder durch eine eingebrachte Widerstandsheizung aufbringen. Schliesslich ist es möglich, längs der Platte 2 in Breitenrichtung den Typ der Wärmebeaufschlagung in den einzelnen Kanälen alternieren zu lassen und abwechselnd zuzuschalten. Natürlich ist es auch möglich, denselben Kanal 38 abwechselnd mit unterschiedlichem Wärmetauschmedium zu beaufschlagen.

Fig. 3 zeigt eine weitergehende Weiterentwicklung von Fig. 2.

Hier ist zum einen auf sekundäre Wärmetauschrippen 6 völlig verzichtet. Dadurch sind die Kanäle 38 allein für die Beaufschlagung mit dem kühlenden und heizenden Wärmetauschmedium vorgesehen. In diesem Fall ist die Anordnung mit alternierender Verwendung der Kanäle 38 besonders bevorzugt, um Umschaltvorgänge der Beaufschlagung einzelner Kanäle vermeiden zu können.

Zum anderen ermöglicht diese Anordnung, zwei Reihen von Kammern 14 und 16 vorzusehen, die zu beiden Seiten der gemeinsamen Platte 2 angeordnet sind und jeweils von als Zwischenwänden dienenden Rippen 4 voneinander getrennt sind.

Diese Rippen 4 sind hier zur Veranschaulichung, dass sie sich nicht gegenüberliegen müssen, etwas zueinander versetzt gezeichnet. Eine entsprechende Versetzung ist natürlich auch bei den anderen Ausführungsbeispielen hinsichtlich der Rippen 4 und 6 möglich, und zwar bis zur hälftigen Versetzung.

Der Dampfraum ist hier von zwei gesonderten Teildampfräumen 26a und 26b gebildet, die über eine Verbindungsleitung 40 praktisch druckabfallsfrei miteinander kommunizieren. Die Verbindungsleitung 40 ist jeweils über einen Anschluss 36 mit dem Dampfraum 26a bzw. 26b verbunden und lässt sich über entsprechende Ventileinrichtungen über die weiterführenden Leitungsabschnitte 42 und 44 mit dem Verdampfer bzw. Kondensator des Absorptionskreislaufes verbinden. Nach aussen hin übernehmen dabei die Anschlüsse 42 und 44 die Funktion der Anschlüsse 32 und 34.

Wenn man für den Wärmeübergang nicht allein auf die Kanäle 38 vertrauen will, wie dies die Anordnung gemäss Fig. 3 vorsieht, sondern von einem Wärmetauschmedium beaufschlagte Verrippungen wie die Rippen 6 beibehalten möchte, kann man eine Zusammenschaltung von zwei Reihen von Kammern 14 und 16 mit einem Wärmetauscher der Bauart gemäss Fig. 2 nach Fig. 6 vorsehen. Die gleiche Anordnungsweise kann auch bei Zusammenschaltung von Wärmetauschern gemäss Fig. 1 vorgesehen sein. Bemerkenswert ist hier, dass die den Platten 2 abgewandten Stirnseiten der jeweiligen Kammern 14 und 16 der beiden Reihen an einem gemeinsamen Dampfraum 26 angeschlossen sind, der über einen Leitungsanschluss 36 wiederum wahlweise abwechselnd an einen Verdampfer und einen Kondensator des Absorberkreislaufes angeschlossen werden kann, wie durch die beiden Bezugszeichen 42 und 44 angedeutet ist.

In nicht dargestellter Alternative könnte man auch die Rippen 6 beider Rippenwärmetauscher zusammenfassen, mit ihrer Hilfe einen beiden Wärmetauschern gemeinsamen Gaskanal 10 bilden und stattdessen zwei gesonderte Dampfräume 26a und 26b bilden, die nach Art von Fig. 3 zusammenschaltbar sind.

Während die Fig. 1 bis 3 und 6 Feststoffabsorber mit Rippenwärmetauscher betreffen, betreffen die Fig. 4, 5 und 7 Feststoffabsorber mit Flachrohr-Rohrbündelwärmetauschern.

Hierbei werden die aussen liegenden Kammern 14 sowie die innen liegenden Kammern 16 durch als im wesentlichen langgestreckt rechteckig ausgebildete Flachrohre 46 voneinander abgeteilt, die in nicht dargestellter Weise so, wie bei Rohrbündelwärmetauschern üblich, von gemeinsamen Rohrböden mit Wärmetauschmedium, vorzugsweise Wärmetauschflüssigkeit, gespeist werden können. Beispielsweise kann man hierbei Wärmeträgeröle verwenden.

Bei diesen Ausführungsformen ist eine Platte 2 nicht mehr erforderlich, desgleichen nicht eine für indirekte Wärmeübertragung vorgesehene Verrippung mit Rippen 6. Grundsätzlich könnte man allerdings auch Rippenwärmetauscher gemäss den Fig. 1 bis 3 und 6 so abwandeln, dass an die Stelle der Rippen 4 Flachrohre 46 treten, falls man wiederum eine kombinierte Heiz- und Kühlwirkung anstreben sollte, die beispielsweise direkt und zugleich indirekt folgen soll. Diese Kombinationsmöglichkeit soll im folgenden jedoch nicht mehr im einzelnen betrachtet werden.

Bei der Ausführungsform gemäss Fig. 4 bleibt von dem Gehäuse des Feststoffabsorbers gemäss Fig. 1 noch der den Dampfraum 26 umgebende Teil übrig, der sich mit einem Gehäusebasisteil 48 ergänzen kann. Entsprechendes gilt übrigens auch für die Anordnung gemäss Fig. 3.

Zusätzlich zu der dünnen Schicht 20 gemäss Fig. 1 mit Gitterwerk 22 ist hier noch eine weitere dünne Schicht 50 angeordnet, die zwischen den dem Dampfraum 26 fernen freien Kanten der Flachrohre 46 und dem Basisteil 48 angeordnet ist und wiederum vorzugsweise eine Dicke von etwa oder höchstens der halben Breite b der Kammern hat.

Ebenso wie im Falle von Fig. 3 lassen sich auch zweireihige Anordnungen der Art von Fig. 4 miteinander verschalten. Da hier jedoch keine Platte 2 mehr erforderlich ist, können die beiden Kammern 14 und 16 jeder Reihe unmittelbar zusammenhängen, so dass hier ohne Funktionsänderung zwei Kammern mit der Gesamttiefe 2h aufeinanderfolgen und die dünne Schicht 50 sowie der Basisteil 48 entbehrlich werden.

Auch hier kann man jedoch die Zusammenfassung auch umgekehrt vornehmen, indem zwei Reihen von Kammern 14 und 16 gemäss Fig. 4 nunmehr ein gemeinsamer Dampfraum 26 zugeordnet wird, wie Fig. 7 zeigt. Funktionell entspricht hier die Zuordnung der von Fig. 6, wenn auch ein anderer Wärmetauschertyp zugrunde gelegt ist.

Schliesslich kann man auch noch gemäss Fig. 8 zur Kammerbildung für den Absorberfeststoff des Feststoffabsorbers einen Kreuzstrom-Plattenwärmetauscher zugrunde legen. Das in einer Richtung längs der Kanäle geführte Kanalsystem kann dabei alternativ das kühlende oder heizende Wärmetauschmedium aufnehmen, wie dies durch Pfeile 52 angegeben ist. Die Plattenzwischenräume des ineinandergeschachtelten alternativen Strömungssystems werden mit dem Absorberfeststoff 18 im wesentlichen aufgefüllt und mittels des Gitterwerks 22 gegenüber einem Dampfraum abgeschlossen, der mit einem Leitungsanschluss 36 verbunden ist und entsprechend den gegenläufigen Pfeilen, welche den Anschlüssen 42 und 44 entsprechen, abwechselnd gemäss hineinführendem Pfeil 42 mit dem Verdampfer oder herausführendem Pfeil 44 mit dem Kondensator verbindbar ist. Anstelle eines Dampfraums kann man auch an beiden Stirnseiten des aufgefüllten Systens zwei gesonderte Dampfräume vorsehen, die nach Art der Fig. 3 und 5 durch eine Verbindungsleitung 40 innerhalb oder ausserhalb des Gehäuses verbunden sind.

Bei dem Bautyp, bei dem die Zwischenwände als selbst Wärmetauschmedium führende Hohlleitungen ausgebildet sind, kann man anstelle der nur leicht abgerundeten rechteckigen einzelnen Flachrohre der Ausführungsform gemäss Fig. 4 auch mehrere Rohre 62 verwenden, die sich jeweils gruppenweise zu einer Zwischenwand ergänzen. Dies wird anhand der vier alternativen Ausführungsformen gemäss den Fig. 9 bis 12 erläutert.

Die beschriebenen Ausführungen lassen sich alle im Sinne der sonstigen Offenbarung dieser Anmeldung verstehen und gegebenenfalls modifizieren.

Bei den Feststoffabsorbern gemäss den Fig. 9 bis 12 sind zwei aussen liegende Kammern 14 und eine Vielzahl innen liegender Kammern 16, mindestens jedoch eine innen liegende Kammer, in Reihe nebeneinander angeordnet und durch Zwischenwände unterteilt, die im Fall der Fig. 9 und 10 von jeweils drei und im Fall der Fig. 11 und 12 von jeweils vier Rundrohren 62 gebildet sind und jeweils ein einziges Flachrohr 46 gemäss Fig. 4 ersetzen. Die Rundrohre 62 sind ihrerseits von einem Wärmetauschfluid durchströmbar und an ihren aus der Zeichnungsebene herausgeführten Enden in üblicher Weise strömungsmässig zusammengefasst, z.B. durch konventionelle Rohrböden.

Die Kammern 14 und 16 sind mit Absorberfeststoff 18, z.B. Zeolithgranulat, aufgefüllt. Dieser Absorberfeststoff erstreckt sich von einem horizontalen Basisteil 48 des Feststoffabsorbers 18 bis zur gegenüberliegenden ebenen Grenzfläche an einen vom Kältemitteldampf beaufschlagbaren Dampfraum 26, der über einen Leitungsanschluss 36 an den Absorptionskreisprozess angeschlossen ist.

Abstandhalter 24 sind an einem Gitterwerk 22 befestigt, das zum Niederhalten des Absorberfeststoffs 18 dient und sich längs der dem Dampfraum zugewandten Grenzfläche des Absorberfeststoffs 18 erstreckt. Die Abstandhalter stützen sich an der dem Absorberfeststoff 18 abgewandten Seite des Gehäuses des Feststoffabsorbers ab, die z.B. analog dem Basisteil 48 geformt sein kann, aber z.B. auch wie bei anderen Ausführungsbeispielen ein Deckel sein kann. Wie früher beschrieben, kann das Gitterwerk 22 aus einem den Kammern zugewandten feinen Staubsieb und einem dem Dampfraum zugewandten groben Stützgitter zusammengesetzt sein, wobei das grobe Stützgitter zweckmässig mit den Abstandhaltern verbunden ist. Auch das Staubsieb kann am Stützgitter befestigt sein; es reicht jedoch aus, es lose zwischen dem Stützgitter und dem Absorberfeststoff einzuspannen.

Auf dem Basisteil 48 erstreckt sich eine zusammenhängende dünne Schicht 50 des Absorberfeststoffs 18. Desgleichen erstreckt sich unter dem Gitterwerk 22 eine zusammenhängende dünne Schicht 20 des Absorberfeststoffs 18. Längs dieser beiden Schichten, welche den nicht den Kammern zugewandten Flächen der Zwischenwände zwischen den Kammern gegenüberliegen, stehen diese Kammern teilweise miteinander in Verbindung. Dasselbe gilt für Lücken 60 zwischen Rohren 62 derselben Zwischenwand. Auch über diese von Absorberfeststoff erfüllten Lücken kommunizieren benachbarte Kammern, die demnach nur teilweise voneinander abgeteilt sind.

In nicht gezeigter, aber in den Fig. 11 und 12 schon eher als in den Fig. 9 und 10 realisierter alternativer Anordnung kann man aber auch die Rohre 62 jeder Zwischenwand bis in gegenseitige Berührung aneinander heranrücken, so dass die Lücken 60 verschwinden.

Bei den gezeigten Beispielen der Fig. 9 bis 12 sind ferner die Rohre 62 Rundrohre. Diese könnte man aber auch durch einzelne Flachrohre, z.B. Ovalrohre, ersetzen, wobei die Flachrohre zweckmässig mit ihrem grösseren Durchmesser in Richtung der jeweiligen Zwischenwand angeordnet sind.

Bei den Ausführungsformen gemäss Fig. 9 und 11 erstrecken sich jeweils drei bzw. vier Rohre 62 unter Ersetzung jeweils eines Flachrohres 46 der Anordnung von Fig. 4 geradlinig in Tiefenrichtung der inneren Kammern 16 und auch der äusseren Kammern 14, so dass beide Kammerarten im wesentlichen quaderförmige Gestalt behalten.

Die Ausführungsform gemäss Fig. 10 unterscheidet sich von der gemäss Fig. 9 dadurch, dass die Achsen der innen liegenden Kammern 16 bogenförmig in Tiefenrichtung der Kammern 16 gekrümmt verlaufen. Hierzu sind die jeweils mittleren Rohre 62a jeder Zwischenwand gegenüber den in Tiefenrichtung der Kammern aufeinander ausgerichteten Rohren 62 jeder Zwischenwand bzw. gegenüber den von den Rohren 62 gebildeten äusseren Rohrreihen unvollständig auf Lücke versetzt. Eine auch mögliche vollständige Versetzung auf Lücke würde in Abweichung von der zeichnerischen Darstellung von Fig. 10 jeweils gleichen Abstand der Rohre 62a zu den nächst benachbarten Rohren 62 der beiden anderen Rohrreihen bedeuten.

Die Ausführungsform gemäss Fig. 12 unterscheidet sich von der gemäss Fig. 10 dadurch, dass bei Anordnung von vier Rundrohren 62 pro Zwischenwand der Rohranordnung von Fig. 10 noch jeweils im Anschluss an die dünne Schicht 20 ein Rohr 62b vorgelagert ist, wobei die Rohre 62b über den Rohren 62a angeordnet sind. Desgleichen sind die beiden verbleibenden Rohre 62 jeder Zwischenwand übereinander angeordnet. Dadurch wird die immer noch annähernd quaderförmige Form der innen liegenden Kammern 16 in eine etwas schlangenlinienförmige Form modifiziert. Darüber hinaus sind, wie bei Fig. 11, die Lücken zwischen den Rohren geringer geworden oder im Grenzfall ganz geschwunden.

Es ist möglich, pro Zwischenwand auch nur zwei Rohre 62, oder aber auch mehr als vier Rohre 64, vorzusehen und auch die Form der Kammern, insbesondere der innen liegenden Kammern 16, weiter zu modifizieren.

Man sieht ferner, dass bei allen Fig. 9 bis 12 die Rohre 62 (einschliesslich 62a und 62b) in einem regelmässigen Rastermass mit gleichem Abstand zwischen den zum Dampfraum 26 parallelen Reihen und gleichem Abstand der Reihen untereinander angeordnet sind.

**Patentansprüche**

1. Feststoffabsorber in Plattenform für einen Absorptionskreisprozess mit einer Vielzahl von durch wärmeübertragende Zwischenwände voneinander abgeteilten nebeneinanderliegenden Kammern (14, 16), die mit Absorberfeststoff (18) angefüllt sind, an einer Stirnseite mit einem von Kältemitteldampf beaufschlagbaren gemeinsamen Dampfraum (26) kommunizieren, der abwechselnd an einen Verdampfer und einen Kondensator des Absorptionskreisprozesses anschliessbar ist, um über Kammerwände abwechselnd mit einem kühlenden und einem heizenden Wärmetauschmedium in Wärmetausch zu treten, dadurch gekennzeichnet, dass der Dampfraum (26) den mit ihrer Tiefendimension im wesentlichen rechtwinklig an den Dampfraum anschliessenden Kammern (14, 16) in Richtung der Plattendicke gegenüberliegt, und dass die Zwischenwände als Wärmeleitrippen (4) eines mit Wärmetauschmedium sekundär in Wärmetausch tretenden Rippenwärmetauschers oder als selbst Wärmetauschmedium führende Hohlleitungen (46; 62) so ausgelegt sind, dass die Zwischenwände wenigstens den überwiegenden Anteil des Wärmeflusses zwischen dem Absorberfeststoff mindestens der zwischen Nachbarkammern gelegenen Kammer(n) (16) und dem jeweiligen Wärmetauschmedium aufnehmen.

2. Feststoffabsorber nach Anspruch 1, dadurch gekennzeichnet, dass der Rippenwärmetauscher eine ein- oder beidseitig berippte Platte (2) aufweist, deren an einer Seite vorgesehenen Rippen die Wärmeleitrippen (4) sind.

3. Feststoffabsorber nach Anspruch 2, dadurch gekennzeichnet, dass an einer Seite einer beidseitig berippten Platte vorgesehene Rippen (6) und/oder innerhalb der Platte (2) und/oder der Rippen (4, 6) ausgesparte Kanäle (38) von dem Wärmetauschmedium beaufschlagt sind.

4. Feststoffabsorber nach Anspruch 3, dadurch gekennzeichnet, dass jeweils ein Kanal (38) mehreren Kammern (14, 16) zugeordnet ist.

5. Feststoffabsorber nach Anspruch 3 oder 4, dadurch gekennzeichnet, dass mindestens ein Kanal (38) eine Widerstandsheizung aufnimmt.

6. Feststoffabsorber nach Anspruch 5, dadurch gekennzeichnet, dass Kanäle (38) mit einer Widerstandsheizung und mit Beaufschlagung durch ein flüssiges oder dampfförmiges Wärmetauschmedium alternieren.

7. Feststoffabsorber nach Anspruch 3, dadurch gekennzeichnet, dass das Wärmetauschmedium in einem Gaskanal (10) längs der Rippen (6) einer beidseitig berippten Platte geführt ist.

8. Feststoffabsorber nach einem der Ansprüche 1 bis 7, dadurch gekennzeichnet, dass der Rippenwärmetauscher ein Strangpressprofil, vorzugsweise aus Aluminium oder einer Aluminiumlegierung, ist.

9. Feststoffabsorber nach einem der Ansprüche 1 bis 8, dadurch gekennzeichnet, dass die dem Dampfraum (26) zugewandten Kanten der Zwischenwände von einer dünnen Schicht (20; 50; 60) des Absorberfeststoffes (18) überdeckt sind.

10. Feststoffabsorber nach Anspruch 9, dadurch gekennzeichnet, dass die Schichtdicke etwa dem halben Abstand b der Zwischenwände (4; 46) entspricht.

11. Feststoffabsorber nach einem der Ansprüche 1 bis 10, dadurch gekennzeichnet, dass die Zwischenwände (4; 46) die von ihnen gebildeten Kammern (14, 16) nur teilweise voneinander abteilen.

12. Feststoffabsorber nach Anspruch 1 oder 11, dadurch gekennzeichnet, dass die als Hohlleitungen ausgebildeten Zwischenwände von längs der jeweiligen Zwischenwand verteilten Rohren (62) gebildet sind.

13. Feststoffabsorber nach Anspruch 12, dadurch gekennzeichnet, dass die Rohre (62) Rundrohre sind.

14. Feststoffabsorber nach Anspruch 12, dadurch gekennzeichnet, dass die Rohre (62) Flachrohre sind.

15. Feststoffabsorber nach Anspruch 1 oder einem der Ansprüche 12 bis 13, dadurch gekennzeichnet, dass die als Hohlleitungen ausgebildeten Zwischenwände jeweils einzelne Flachrohre (46) sind.

16. Feststoffabsorber nach Anspruch 15, dadurch gekennzeichnet, dass diese Flachrohre (46) einen etwas abgerundeten rechteckigen Querschnitt haben.

17. Feststoffabsorber nach einem der Ansprüche 12 bis 16, dadurch gekennzeichnet, dass die Rohre (46; 62) durch Rohrböden zu einen Rohrbündelwärmetauscher zusammengefasst sind.

18. Feststoffabsorber nach Anspruch 1, dadurch gekennzeichnet, dass die Hohlleitungen von dem einen Kanalsystem eines Kreuzstrom-Plattenwärmetauschers (Fig. 8) gebildet sind, dessen zweites Kanalsystem die Kammern bildet.

19. Feststoffabsorber nach einem der Ansprüche 1 bis 18, dadurch gekennzeichnet, dass beide Stirnseiten der Kammern (14, 16) mit je einem Dampfraum (26a, 26b) kommunizieren, die miteinander verbunden (Leitung 40) sind.

20. Feststoffabsorber nach einem der. Ansprüche 1 bis 19, dadurch gekennzeichnet, dass die dem Dampfraum (26; 26a; 26b) zugewandte Seite der Kammern (14, 16) bzw. der überdeckenden Schicht (20) von einem dampfdurchlässigen und den Absorberfeststoff (18) niederhaltenden Gitterwerk (22) überdeckt ist.

21. Feststoffabsorber nach Anspruch 20, dadurch gekennzeichnet, dass das Gitterwerk (22) ein feines Staubsieb und ein grobes Stützgitter aufweist.

22. Feststoffabsorber nach einem der Ansprüche 1 bis 21, dadurch gekennzeichnet, dass der Dampfraum (26; 26a; 26b) drosselungsarm zusammenhängend ausgebildet ist.

23. Feststoffabsorber nach Anspruch 22, dadurch gekennzeichnet, dass im Dampfraum (26; 26a; 26b) Abstandhalter (24) zwischen den dem Dampfraum zugewandten Stirnseiten der Kammern (14, 16), gegebenenfalls zugleich unter Abstützung an den die Kammern füllenden Absorberfeststoff (18), und der Wandung des Dampfraums verteilt sind.

24. Feststoffabsorber nach Anspruch 23, dadurch gekennzeichnet, dass die Abstandhalter (24) zugleich das Gitterwerk (22) niederhalten.

25. Feststoffabsorber nach einem der Ansprüche 1 bis 24, dadurch gekennzeichnet, dass der Dampfraum (26; 26a; 26b) mit einem lösbaren Deckel (28) versehen ist.

26. Feststoffabsorber nach Anspruch 25, dadurch gekennzeichnet, dass die Abstandhalter (24) vom Deckel (28) getragen sind.

27. Feststoffabsorber nach Anspruch 23 oder 24, dadurch gekennzeichnet, dass die Abstandhalter (24) von dem Gitterwerk (22) getragen sind.

28. Feststoffabsorber nach einem der Ansprüche 1 bis 27, dadurch gekennzeichnet, dass mindestens die innenliegenden Kammern (16) quaderförmig ausgebildet sind.

29. Feststoffabsorber nach einem der Ansprüche 1 bis 27, dadurch gekennzeichnet, dass die Achse mindestens der innenliegenden Kammern in deren Tiefenrichtung gekrümmt verläuft.

30. Feststoffabsorber nach Anspruch 29, dadurch gekennzeichnet, dass die Rohre (62) gegeneinander versetzt angeordnet sind.

31. Feststoffabsorber nach Anspruch 30, dadurch gekennzeichnet, dass die Rohre (62) auf Lücke versetzt angeordnet sind.

32. Feststoffabsorber nach einem der Ansprüche 1 bis 31, dadurch gekennzeichnet, dass die einem Dampfraum (26; 26a; 26b) zugeordnete Tiefe h mindestens einer innenliegenden Kammer (16) höchstens 10 cm und die Breite b dieser Kammer (16) höchstens 2 cm betragen.

33. Feststoffabsorber nach Anspruch 32, dadurch gekennzeichnet, dass die Kammertiefe h im Bereich von 2 bis 6 cm, vorzugsweise bei Strangpressprofilen von 2 bis 4 cm und bei Rohrbündelwärmetauschern von 2 bis 6 cm, liegt.

34. Feststoffabsorber nach Anspruch 32 oder 33, dadurch gekennzeichnet, dass die Kammerbreite b im Bereich von 3 bis 10 mm, vorzugsweise bei etwa ca. 6 mm, liegt.

35. Feststoffabsorber nach einem der Ansprüche 1 bis 34, dadurch gekennzeichnet, dass der Absorberfeststoff (18) ein Granulat, vorzugsweise Zeolith, ist.

**Claims**

1. Absorber, using a solid, in plate form for an absorption cycle, having a multiplicity of mutually adjoining chambers (14, 16) which are divided from one another by heat-transferring partitions, are filled with absorber solid (18) and, on one end face, communicate with a common vapour space (26), to which refrigerant vapour can be admitted and which can be connected alternately to a vapourizer and to a condenser of the absorption cycle in order to undergo heat exchange through chamber walls with alternately a cooling and a heating heat exchange medium, characterized in that the vapour space (26) is located opposite, in the direction of the plate thickness, to the chambers (14, 16), the depth dimension of which adjoins the vapour space substantially at right angles, and that the partitions are designed as heat conduction fins (4) of a finned heat exchanger, which undergoes secondary heat exchange with a heat exchange medium, or as hollow conduits (46; 62) which themselves carry heat exchange medium, in such a way that the partitions take up at least a predominant part of the heat flux between the absorber solid of at least the chamber(s) (16), located between adjoining chambers, and the respective heat exchange medium.

2. Absorber using a solid according to Claim 1, characterized in that the finned heat exchanger has a plate (2) which is finned on one side or both sides and in which the fins provided on one side are the heat conduction fins (4).

3. Absorber using a solid according to Claim 2, characterized in that the heat exchange medium is admitted to fins (6) provided on one side of a plate finned on both sides and/or to channels (38) recessed within the plate (2) and/or the fins (4, 6).

4. Absorber using a solid according to Claim 3, characterized in that one channel (38) is associated in each case with a plurality of chambers (14, 16).

5. Absorber using a solid according to Claim 3 or 4, characterized in that at least one channel (38) contains a resistance heater.

6. Absorber using a solid according to Claim 5, characterized in that channels (38) with a resistance heater alternate with channels to which a liquid or vapourous heat exchange medium is admitted.

7. Absorber using a solid according to Claim 3, characterized in that the heat exchange medium passes through a gas channel (10) along the fins (6) of a plate finned on both sides.

8. Absorber using a solid according to one of Claims 1 to 7, characterized in that the finned heat exchanger is an extruded profile, preferably of aluminium or an aluminium alloy.

9. Absorber using a solid according to one of Claims 1 to 8, characterized in that the edges, facing the vapour space (26), of the partitions are covered by a thin layer (20; 50; 60) of the absorber solid (18).

10. Absorber using a solid according to Claim 9, characterized in that the layer thickness corresponds approximately to half the spacing b of the partitions (4; 46).

11. Absorber using a solid according to one of Claims 1 to 10, characterized in that the partitions (4; 46) only partially separate the chambers (14, 16), formed by them, from one another.

12. Absorber using a solid according to Claim 1 or 11, characterized in that the partitions designed as hollow conduits are formed by tubes (62) distributed along the particular partition.

13. Absorber using a solid according to Claim 12, characterized in that the tubes (62) are round tubes.

14. Absorber using a solid according to Claim 12, characterized in that the tubes (62) are flat tubes.

15. Absorber using a solid according to Claim 1, or one of Claims 12 to 13, characterized in that the partitions designed as hollow conduits are each individual flat tubes (46).

16. Absorber using a solid according to Claim 15, characterized in that these flat tubes (46) have a slightly rounded rectangular cross-section.

17. Absorber using a solid according to one of Claims 12 to 16, characterized in that the tubes (46; 62) are combined by means of tube plates to give a tube bundle heat exchanger.

18. Absorber using a solid according to Claim 1, characterized in that the hollow conduits are formed by one channel system of a crossflow plate heat exchanger (Figure 8), whose second channel system forms the chambers.

19. Absorber using a solid according to one of Claims 1 to 18, characterized in that each of the end faces of the chambers (14, 16) communicate with inter connected (line 40) vapour spaces (26a, 26b).

20. Absorber using a solid according to one of Claims 1 to 19, characterized in that the side, facing the vapour space (26; 26a; 26b), of the chambers (14, 16) or of the covering layer (20) is covered by a vapour-permeable grid structure (22) which holds down the absorber solid (18).

21. Absorber using a solid according to Claim 20, characterized in that the grid structure (22) comprises a fine dust screen and a coarse support grid.

22. Absorber using a solid according to one of Claims 1 to 21, characterized in that the vapour space (26; 26a; 26b) is designed to be continuous with few restrictions.

23. Absorber using a solid according to Claim 22, characterized in that spacers (24) are distributed in the vapour space (26; 26a; 26b) between the end faces, facing the vapour space, of the chambers (14, 16), if appropriate with simultaneous support of the absorber solid (18) filling the chambers, and the wall of the vapour space.

24. Absorber using a solid according to Claim 23, characterized in that the spacers (24) at the same time hold down the grid structure (22).

25. Absorber using a solid according to one of Claims 1 to 24, characterized in that the vapour space (26; 26a; 26b) is provided with a releasable cover (28).

26. Absorber using a solid according to Claim 25, characterized in that the spacers (24) are carried by the cover (28).

27. Absorber using a solid according to Claim 23 or 24, characterized in that the spacers (24) are carried by the grid structure (22).

28. Absorber using a solid according to one of Claims 1 to 27, characterized in that at least the interior chambers (16) are of cuboid shape.

29. Absorber using a solid according to one of Claims 1 to 27, characterized in that the axis of at least the interior chambers follows a curve in the depth direction thereof.

30. Absorber using a solid according to Claim 29, characterized in that the tubes (62) are arranged with a mutual offset.

31. Absorber using a solid according to Claim 30, characterized in that the tubes (62) are offset in a staggered arrangement.

32. Absorber using a solid according to one of Claims 1 to 31, characterized in that the depth associated with a vapour space (26; 26a; 26b) of at least one interior chamber (16) is at most 10 cm and the width b of this chamber (16) is at least 2 cm.

33. Absorber using a solid according to Claim 32, characterized in that the chamber depth h is in the range from 2 to 6 cm, possibly 2 to 4 cm in the case of extruded profiles and 2 to 6 cm in the case of tube bundle heat exchangers.

34. Absorber using a solid according to Claim 32 or 33, characterized in that the chamber width b is in the range from 3 to 10 mm, preferably approximately 6 mm.

35. Absorber using a solid according to one of Claims 1 to 34, characterized in that the absorber solid (18) is a granulated material, preferably a zeolite.

**Revendications**

1. Absorbeur utilisant une matière solide, sous forme de plaques, pour un cycle d'absorption, comportant un grand nombre de compartiments (14, 16), disposés les uns à côté des autres, et séparés les uns des autres par des parois intermédiaires transmettant la chaleur, compartiments remplis du solide absorbant (18) et, par une face frontale, communiquent avec un espace de vapeur commun (26), pouvant recevoir une vapeur de fluide frigorigène, espace de vapeur pouvant être alternativement raccordé à un vaporiseur et à un condenseur du circuit d'absorption, pour pouvoir entrer alternativement en échange de chaleur avec un fluide caloporteur réfrigérant et un fluide caloporteur chauffant, caractérisé en ce que l'espace de vapeur (26) est opposé, dans le sens de l'épaisseur des plaques, aux compartiments (14, 16) qui, par leur profondeur, se raccordent d'une manière essentiellement perpendiculaire à l'espace de vapeur, et en ce que les parois intermédiaires sont construites sous la forme d'ailettes conductrices de la chaleur (4) d'un échangeur de chaleur à ailettes entrant en échange de chaleur secondaire avec un fluide caloporteur, ou sous la forme de conduites creuses (46; 62) conduisant elles-mêmes le fluide caloporteur, de façon que les cloisons intermédiaires absorbent au moins la plus grande partie du flux thermique entre le solide absorbant d'au moins le ou les compartiments disposés entre des compartiments voisins, d'une part, et le fluide caloporteur correspondant, d'autre part.

2. Absorbeur utilisant une matière solide selon la revendication 1, caractérisé en ce que l'échangeur de chaleur à ailettes possède une plaque (2), comportant des ailettes sur un côté ou sur les deux côtés, et dont les ailettes prévues sur l'un des côtés sont les ailettes conductrices de la chaleur (4).

3. Absorbeur utilisant une matière solide selon la revendication 2, caractérisé en ce que des ailettes (6) prévues sur un côté d'une plaque comportant des ailettes sur les deux côtés, et/ou des conduits (38), obtenus par évidement dans la plaque (2) et/ou les ailettes (4, 6), sont soumis au fluide caloporteur.

4. Absorbeur utilisant une matière solide selon la revendication 3, caractérisé en ce qu'à chaque conduit (38) sont affectés plusieurs compartiments (14, 16).

5. Absorbeur utilisant une matière solide selon la revendication 3 ou 4, caractérisé en ce qu'au moins un conduit (38) possède un chauffage par résistance.

6. Absorbeur utilisant une matière solide selon la revendication 5, caractérisé en ce que les conduits (38) comportant un chauffage par résistance alternent avec des conduits soumis à un fluide caloporteur, sous forme liquide ou vapeur.

7. Absorbeur utilisant une matière solide selon la revendication 3, caractérisé en ce que le fluide caloporteur est envoyé dans un conduit de gaz (10), le long des ailettes (6) d'une plaque pourvue d'ailettes des deux côtés.

8. Absorbeur utilisant une matière solide selon l'une des revendications 1 à 7, caractérisé en ce que l'échangeur de chaleur à ailettes est un profilé extrudé, de préférence en aluminium ou en un alliage d'aluminium.

9. Absorbeur utilisant une matière solide selon l'une des revendications 1 à 8, caractérisé en ce que les bords des parois intermédiaires, dirigés vers l'espace de vapeur (26), sont recouverts d'une couche mince (20; 50; 60) du solide absorbant (18).

10. Absorbeur utilisant une matière solide selon la revendication 9, caractérisé en ce que l'épaisseur de la couche correspond approximativement à la moitié de la distance b entre les parois intermédiaires (4; 46).

11. Absorbeur utilisant une matière solide selon l'une des revendications 1 à 10, caractérisé en ce que les parois intermédiaires (14; 46) ne séparent que partiellement les uns des autres les compartiments (14, 16) formés par ces parois.

12. Absorbeur utilisant une matière solide selon la revendication 1 ou 11, caractérisé en ce que les parois intermédiaires, constituées de conduites creuses, sont formées de tubes (62) répartis le long de chaque paroi intermédiaire.

13. Absorbeur utilisant une matière solide selon la revendication 12, caractérisé en ce que les tubes (62) sont des tubes ronds.

14. Absorbeur utilisant une matière solide selon la revendication 12, caractérisé en ce que les tubes (62) sont des tubes plats.

15. Absorbeur utilisant une matière solide selon la revendication 1 ou l'une des revendications 12 ou 13, caractérisé en ce que les parois intermédiaires constituées de conduites creuses sont chacune constituées de tubes plats individuels (46).

16. Absorbeur utilisant une matière solide selon la revendication 15, caractérisé en ce que ces tubes plats (46) ont une section transversale rectangulaire, un peu arrondie.

17. Absorbeur utilisant une matière solide selon l'une des revendications 12 à 16, caractérisé en ce que les tubes (46; 62) sont réunis par un plateau à tubes pour former un échangeur de chaleur à faisceau tubulaire.

18. Absorbeur utilisant une matière solide selon la revendication 1, caractérisé en ce que les conduites creuses sont formées par l'un des systèmes de conduits d'un échangeur de chaleur à plaques à courants inversés, dont le deuxième système de conduits forme les compartiments.

19. Absorbeur utilisant une matière solide selon l'une des revendications 1 à 18, caractérisé en ce que les deux faces frontales des compartiments (14, 16) communiquent chacune avec un espace de vapeur (26a, 26b), ces espaces de vapeur étant reliés l'un à l'autre par la conduite (40).

20. Absorbeur utilisant une matière solide selon l'une des revendications 1 à 19, caractérisé en ce que le côté des compartiments (14, 16), ou de la couche de revêtement (20), dirigé vers l'espace de vapeur (26; 26a; 26b), est revêtu d'un grillage (22), perméable à la vapeur et qui maintient en place le solide absorbeur (18).

21. Absorbeur utilisant une matière solide selon la revendication 20, caractérisé en ce que le grillage (22) présente un tamis à poussières, à faible ouverture de maille, et une grille-support, à grande ouverture de maille.

22. Absorbeur utilisant une matière solide selon l'une des revendications 1 à 21, caractérisé en ce que l'espace de vapeur (26; 26a; 26b) est conçu d'une manière continue, sans étranglement.

23. Absorbeur utilisant une matière solide selon la revendication 22, caractérisé en ce que, dans l'espace de vapeur (26; 26a; 26b), sont répartis des écarteurs (24) entre d'une part les faces frontales, dirigées vers l'espace de vapeur, des compartiments (14, 16), avec éventuellement aussi un appui contre le solide absorbant (18) qui remplit les compartiments, et d'autre part la paroi de l'espace de vapeur.

24. Absorbeur utilisant une matière solide selon la revendication 23, caractérisé en ce que les écarteurs (24) maintiennent simultanément en place le grillage (22).

25. Absorbeur utilisant une matière solide selon l'une des revendications 1 à 24, caractérisé en ce que l'espace de vapeur (26; 26a; 26b) est pourvu d'un couvercle amovible (28).

26. Absorbeur utilisant une matière solide selon la revendication 25, caractérisé en ce que les écarteurs (24) sont supportés par le couvercle (28).

27. Absorbeur utilisant une matière solide selon la revendication 23 ou 24, caractérisé en ce que les écarteurs (24) sont supportés par le grillage (22).

28. Absorbeur utilisant une matière solide selon l'une des revendications 1 à 27, caractérisé en ce qu'au moins les compartiments intérieurs (16) ont la forme d'un parallélépipède.

29. Absorbeur utilisant une matière solide selon l'une des revendications 1 à 27, caractérisé en ce que l'axe d'au moins les compartiments intérieurs est incurvé dans le sens de leur profondeur.

30. Absorbeur utilisant une matière solide selon la revendication 29, caractérisé en ce que les tubes (62) sont disposés décalés les uns contre les autres.

31. Absorbeur utilisant une matière solide selon la revendication 30, caractérisé en ce que les tubes (62) sont disposés d'une manière décalée, sans qu'ils soient en contact les uns avec les autres.

32. Absorbeur utilisant une matière solide selon l'une des revendications 1 à 31, caractérisé en ce que la profondeur h d'au moins un compartiment intérieur (16), affectée à un espace de vapeur (26; 26a; 26b), est d'au moins 10 cm, et que la largeur b de ces compartiments (16) est d'au plus 2 cm.

33. Absorbeur utilisant une matière solide selon la revendication 32, caractérisé en ce que la profondeur h des compartiments est comprise dans l'intervalle de 2 à 6 cm, de préférence de 2 à 4 cm dans le cas des profilés extrudés, et de 2 à 6 cm dans le cas des échangeurs de chaleur à faisceau tubulaire.

34. Absorbeur utilisant une matière solide selon la revendication 32 ou 33, caractérisé en ce que la largeur b des compartiments est comprise dans l'intervalle de 3 à 10 mm, et est de préférence d'environ 6 mm.

35. Absorbeur utilisant une matière solide selon l'une des revendications 1 à 34, caractérisé en ce que le matériau absorbeur (18) est un granulé, de préférence une zéolite.

FIG. 1

FIG. 8

0 131 270

FIG. 2

36

4    16              26         22

38

6              10

2

42                    40                    44

14        14

36    16        16    36

38

26a

22        2

16        16    22

4              4

FIG. 3

26b

14        14

17

FIG. 4

FIG. 5

## FIG. 6

## FIG. 7

FIG.9

FIG.10

FIG. 11

36

24    22    26 20

62

62

14    16         18                    14

FIG. 12

36

24    22    26

62b

62

62a

62

14    16         18                    14